# EUROPÄISCHE PATENTANMELDUNG

(11) **EP 1 035 625 A1**
(43) Veröffentlichungstag der Anmeldung: **13.09.2000**
(21) Anmeldenummer: 00104613.5
(22) Anmeldetag: 03.03.2000
(51) Int. Cl.: H02G 3/00, D01D 13/02

(54) **Spinnereimaschine mit einer Vielzahl entlang der Maschine angeordneter elektrischer Verbraucher**

(30) Priorität: 06.03.1999 DE 19909969
(71) Anmelder: Zinser Textilmaschinen GmbH, D-73058 Ebersbach/Fils (DE)
(72) Erfinder: Oppermann, Ingo, 73765 Neuhausen (DE)

(57) **Zusammenfassung**

Die Erfindung bezieht sich auf eine Spinnereimaschine 1 mit einer Vielzahl entlang der Maschine angeordneter, elektrischer Verbaucher, insbesondere Motoren 7, Lieferwerke 2, Verzugs- und Heizeinrichtungen 3, 4, sowie mit einem Stromleitungssystem 20 zum Versorgen der Verbraucher mit elektrischer Energie, wobei das Stromleitungssystem stromführende Elemente und Anschlusselemente aufweist. Erfindungsgemäß sind die als Kabel 25 ausgebildeten stromführenden Elemente entsprechend der Sektionslänge der Maschine vorgefertigt und an ihren Enden mit Steckern 26 und Buchsen 27 versehen sind, wobei jeweils an einem Ende der Kabel 25 eine Sektionsableitung 30, 31, 32, 33 zur Versorgung mindestens eines der elektrischen Verbraucher vorgesehen ist.

## Beschreibung

Die Erfindung bezieht sich auf eine Spinnereimaschine mit einer Vielzahl entlang der Maschine angeordneter, elektrischer Verbraucher, insbesondere Motoren, Lieferwerke, Verzugs- und Heizeinrichtungen, sowie mit einem Stromleitungssystem zum Versorgen der Verbraucher mit elektrischer Energie, wobei das Stromleitungssystem stromführende Elemente und Anschlusselemente aufweist.

Als Stand der Technik ist bereits eine derartige Konstruktion bekannt (DE 41 33 585 C1), bei welcher das Stromleitungssystem Stromschienen in Form geschlitzter Rohe aufweist. In den Stromschienen sind durch Federkraft festklemmbare Anschlusselemente in der Ausbildung als rohrförmige Hülsenlager verstellbar halterbar. Diese Anschlusselemente können als geschlitzte, rohrförmige Hülsen ausgebildet sein und mindestens eine Kontaktzunge aufweisen.

Das Stromleitungssystem seinerseits besteht im Wesentlichen aus einem schienenförmigen Mantelkörper aus isolierfähigem Material, beispielsweise Kunststoff, sowie in diesen Mantelkörper eingelassenen Stromschienen.

Die Aufgabe der vorliegenden Erfindung besteht nun darin, eine Spinnereimaschine mit einer Vielzahl gemeinsam zu versorgender elektrischer Verbraucher wie Motoren, Lieferwerke, Verzugs- und Heizeinrichtung usw. so zu gestalten, dass der Montageaufwand deutlich reduziert wird und daraus eine Kostensenkung resultiert.

Diese Aufgabe wird erfindungsgemäß dadurch gelöst, dass die als Kabel ausgebildeten stromführenden Elemente entsprechend der Sektionslänge der Maschine vorgefertigt und an ihren Enden mit Steckern und Buchsen versehen sind, und dass jeweils an einem Ende der Kabel eine Sektionsabteilung zur Versorgung mindestens eines der elektrischen Verbraucher vorgesehen ist.

Die vorgefertigten Kabel sind vorteilhafterweise an ihren Enden mit Steckern und Buchsen versehen, welche bei der Montage vor Ort einfach zusammengesteckt werden können. Eine deutliche Reduzierung der Montagezeit wird dadurch erreicht, dass die Spinnereimaschinen in Sektionen für eine Anzahl von Arbeitsstellen (beispielsweise acht oder 16 Arbeitsstellen) komplett vormontiert werden.

Beim Zusammenfügen der einzelnen Sektionen am Bestimmungsort werden gleichzeitig die jeweiligen Buchsen und Stecker miteinander verbunden. An einem Ende der Kabel, entweder im Stecker- oder im Buchsenteil, ist eine Sektionsabteilung zur Versorgung von mindestens einem elektrischen Verbraucher angeschlossen.

Innerhalb einer Sektion sind vorteilhafterweise alle elektrischen Verbraucher einer Funktion, beispielsweise die Motoren für den Spindelantrieb, zusammengefasst und an die jeweilige Sektionsabteilung angeschlossen.

Erfindungsgemäß können in weiterer Ausgestaltung der Erfindung die Buchsen und/oder die Stecker mit den Kabelenden und/oder der Anschluss der Sektionsabteilung mit dem jeweiligen Kabel durch jeweils mindestens eine Quetschverbindung zusammengefügt sein. Weiterhin besteht die Möglichkeit, dass die Gehäuse der Stecker und/oder der Buchsen mit Kunststoff vergossen sind. Hierbei können die Gehäuse vorteilhafterweise Fixierelemente, insbesondere in Form von Aussparungen oder Bohrungen aufweisen.

In weiterer Ausgestaltung der Erfindung besteht eine sektionsweise Vormontage, insbesondere komplette Vorverdrahtung der elektrischen Verbraucher innerhalb einer Sektion über die mit den Steckern und Buchsen versehenen Kabeln.

Die Erfindung wird nachfolgend anhand eines in der Zeichnung dargestellten Ausführungsbeispiels näher beschrieben. In der Zeichnung zeigen:
- Fig. 1: eine schematische Seitenansicht einer Spinnereimaschine mit mehreren Arbeitsstellen, deren elektrische Verbraucher an Stromleitungssysteme angeschlossen sind;
- Fig. 2: das erfindungsgemäße Anschlusselement, bestehend aus Verbindungskabel, Sektionsableitung und Steckverbindung mit Gehäuse und Aussparungen zum Fixieren innerhalb der Sektion;
- Fig. 3: eine Vorderansicht des Anschlusselements nach Fig. 2.

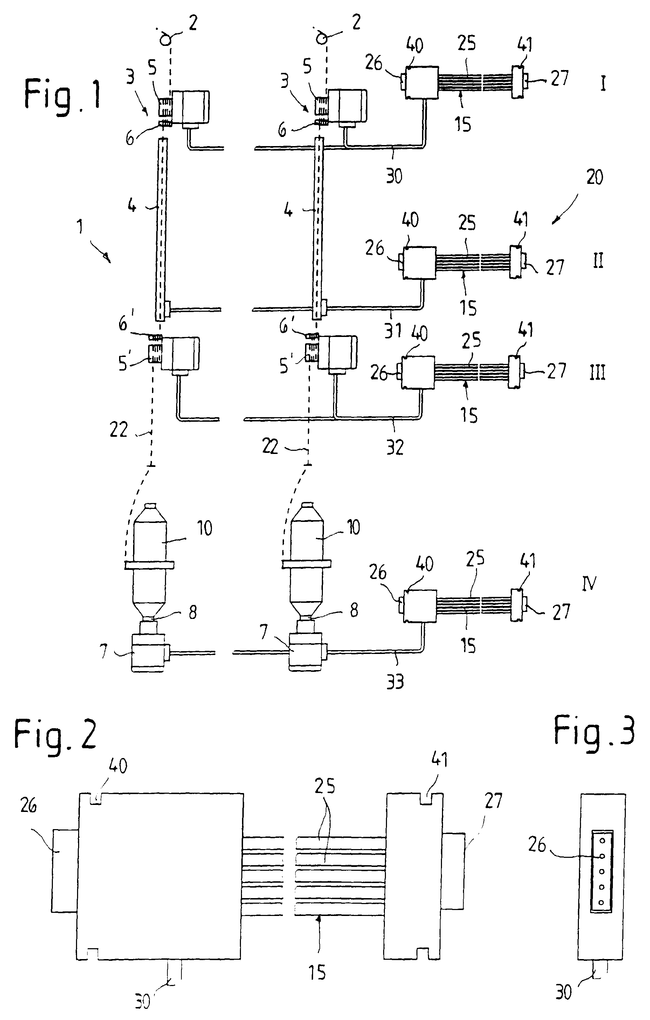

In Fig. 1 ist eine Spinnereimaschine 1 mit einer Vielzahl entlang der Maschine angeordneten elektrischen Verbrauchern dargestellt, beispielsweise mit in Laufrichtung eines Fadens 22 liegenden Lieferwerken 2, Verzugseinrichtungen 3 mit Galetten 5 bzw. 5' und Verlegerollen 6 bzw. 6', sowie mit Heizeinrichtungen 4 und mit Motoren 7 für mit Spulen 10 bestückten Spindeln 8. Außerdem ist ein Stromleitungssystem 20 zum Versorgen der elektrischen Verbraucher mit Energie vorgesehen. Dieses Stromleitungssystem 20 weist stromführende Elemente und Anschlusselemente auf, wobei die als Kabel 25 ausgebildeten stromführenden Elemente entsprechend der Sektionslänge der Maschine bereits vorgefertigt und an ihren Enden mit Steckern 26 und Buchsen 27 versehen sind.

Jeweils an einem Ende der Kabel 25 befindet sich eine Sektionsableitung 30, 31, 32, 33 zur Versorgung mindestens eines der elektrischen Verbraucher, d. h. der Lieferwerke 2, der Verzugs- und Heizeinrichtungen 3, 4 sowie der Motoren 7.

Aus Fig. 1 ist entnehmbar, dass innerhalb einer Sektion I, II, III, IV alle elektrischen Verbraucher einer Funktion zusammengefasst und an die jeweilige zugeordnete Sektionsableitung 30, 31, 32, 33 angeschlossen sind.

Vorteilhafterweise sind insbesondere nach Fig. 2 die Buchsen 26 und/oder die Stecker 27 mit den Kabelenden und/oder der Anschluss der Sektionsableitung 30, 31, 32, 33 mit dem jeweiligen Kabel 25 durch jeweils mindestens eine Quetschverbindung zusammengefügt. Die Gehäuse der Stecker 26 und der Buchsen 27 können mit Kunststoff vergossen sein und nach Fig. 2 Fixierelemente 40, 41, insbesondere in Form von Aussparungen oder Bohrungen aufweisen, welche zur Halterung an nicht näher dargestellten Lagerelementen der Spinnereimaschine dienen.

Durch die vorliegende Erfindung ergibt sich die Möglichkeit einer sektionsweisen Vormontage, innerhalb einer Sektion I, II, III, IV nach Fig. 1 über die mit den Steckern 26 und den Buchsen 27 versehenen Kabel 25. Durch die Vorfertigung der Kabel mit Steckern und Buchsen wird vorteilhafterweise der Montageaufwand deutlich reduziert und damit eine erhebliche Kostenersparnis erzielt. Die Kabel 25, welche jeweils einen Kabelbaum 15 bilden, sind an ihren Enden mit Steckern 26 und Buchsen 27 versehen, welche bei der Montage vor Ort einfach zusammengesteckt werden können.

Eine deutliche Reduzierung der Montagezeiten wird dadurch erreicht, dass die Spinnereimaschine in den Sektionen I, II, III, IV für z. B. acht oder 16 Arbeitsstellen komplett vormontiert werden. Beim Zusammenfügen der einzelnen Sektionen am Bestimmungsort werden gleichzeitig die jeweiligen Stecker 26 und Buchsen 27 miteinander verbunden. An einem Ende der Kabel, entweder im Stecker - oder im Buchsenteil ist eine Sektionsableitung 30, 31, 32 oder 33 zur Versorgung mindestens eines elektrischen Verbrauchers angeschlossen. Innerhalb der Sektion sind alle Verbraucher einer Sektion, z. B. acht Motoren für den Spindelantrieb zusammengefasst und bunt an eine Sektionsableitung angeschlossen.

Durch die vorliegende Erfindung ergibt sich eine erhebliche Reduzierung des Montageaufwandes.

## Patentansprüche

1. Spinnereimaschine (1) mit einer Vielzahl entlang der Maschine angeordneter, elektrischer Verbaucher, insbesondere Motoren (7), Lieferwerke (2), Verzugs- und Heizeinrichtungen (3, 4), sowie mit einem Stromleitungssystem (20) zum Versorgen der Verbraucher mit elektrischer Energie, wobei das Stromleitungssystem stromführende Elemente und Anschlusselemente aufweist,
**dadurch gekennzeichnet,**
dass die als Kabel (25) ausgebildeten stromführenden Elemente entsprechend der Sektionslänge der Maschine vorgefertigt und an ihren Enden mit Steckern (26) und Buchsen (27) versehen sind und
dass jeweils an einem Ende der Kabel (25) eine Sektionsableitung (30, 31, 32, 33) zur Versorgung mindestens einer der elektrischen Verbraucher vorgesehen ist.

2. Maschine nach Anspruch 1, **dadurch gekennzeichnet,** dass innerhalb einer Sektion (I, II, III, IV) alle elektrischen Verbraucher einer Funktion zusammengefasst und an die jeweilige zugeordnete Sektionsabteilung (30, 31, 32, 33) angeschlossen sind.

3. Maschine nach Anspruch 1 oder 2, **dadurch gekennzeichnet,** dass die Buchsen (26) und/oder Stecker (27) mit den Kabelenden und/oder der Anschluss der Sektionsableitung (30, 31, 32, 33) mit dem jeweiligen Kabel (25) durch jeweils mindestens eine Quetschverbindung zusammengefügt sind.

4. Maschine nach einem oder mehreren der vorhergehenden Ansprüche, **dadurch gekennzeichnet,** dass Gehäuse der Stecker (26) und/oder der Buchsen (27) mit Kunststoff vergossen sind.

5. Maschine nach einem oder mehreren der vorhergehenden Ansprüche, **dadurch gekennzeichnet,** dass die Gehäuse der Stecker (26) und/oder der Buchsen (27) Fixierelemente (40, 41), insbesondere Aussparungen oder Bohrungen aufweisen.

6. Maschine nach einem oder mehreren der vorhergehenden Ansprüche, **gekennzeichnet durch** sektionsweise Vormontage, insbesondere komplette Vorverdrahtung der elektrischen Verbraucher innerhalb einer Sektion (I, II, III, IV) über die mit den Steckern (26) und den Buchsen (27) versehenen Kabel (25).
